# FASCICULE DE BREVET EUROPEEN

(11) **EP 2 624 239 B1**
(45) Date de publication et mention de la délivrance du brevet: **20.04.2016**
(21) Numéro de dépôt: 12008237.5
(22) Date de dépôt: 10.12.2012
(51) Int. Cl.: G09B 9/46, G09B 9/18, F02C 9/26

(54) **Procédé de simulation de panne sur un aéronef**
Simulationsverfahren einer Störung in einem Luftfahrzeug
Method for simulating a fault on an aircraft

(30) Priorité: 06.02.2012 FR 1200346
(43) Date de publication de la demande: 07.08.2013
(73) Titulaire: Airbus Helicopters, 13725 Marignane Cedex (FR)
(72) Inventeur: Beaud, Southdary, F-84200 Carpentras (FR); Camhi, Emmanuel, F-13710 Fuveau (FR)
(74) Mandataire: GPI & Associés

(56) Documents cités:
- US-A- 4 831 567
- US-A- 5 873 546
- US-A1- 2002 133 322
- US-A1- 2005 234 689
- US-A1- 2009 186 320

## Description

La présente invention concerne un procédé et un dispositif de simulation de panne pour un aéronef. Le procédé selon l'invention est notamment destiné à simuler, sur un aéronef à voilure tournante muni de deux turbomoteurs, une panne d'un turbomoteur.

Lors de ce type de panne, l'aéronef ne dispose plus que d'un seul turbomoteur fournissant de la puissance. Mais, avec un seul turbomoteur, un niveau de puissance correspondant au niveau de puissance maximum de deux turbomoteurs ne peut évidemment pas être atteint.

L'aéronef est alors dans un mode de fonctionnement dégradé dans lequel la puissance disponible est globalement inférieure à la puissance fournie par l'ensemble des deux turbomoteurs. Cependant, l'aéronef à voilure tournante a besoin, dans des phases particulières de vol, telles que le vol stationnaire ou l'atterrissage, d'une puissance importante.

Dans ce but, le mode de fonctionnement dégradé comprend plusieurs régimes de surpuissance en urgence :
- un premier régime d'urgence, associant une puissance de super urgence dénommée *OEI30",* utilisable pendant une durée de l'ordre de trente secondes consécutives, ce premier régime d'urgence pouvant être utilisé environ trois fois pendant un vol,
- un deuxième régime d'urgence, associant une puissance maximale d'urgence dénommée *OEI2'*, utilisable pendant une durée de l'ordre de deux minutes, et
- un troisième régime d'urgence associant une puissance intermédiaire d'urgence dénommée *OEIcontinu,* utilisable pendant une durée couvrant par exemple la fin du vol.

Les durées d'utilisation du premier régime d'urgence *OEI30"* et du deuxième régime d'urgence *OEI2'*, sont limitées. Les puissances de ces deux régimes sont nettement supérieures à celle d'un fonctionnement normal d'un turbomoteur et l'utilisation de ces deux régimes impose par la suite une maintenance de l'aéronef. Par contre, le dépassement de ces temps d'utilisation préconisés peut générer des dégradations plus importantes voire immédiates sur le turbomoteur ou les moyens de transmission de puissance, par exemple à des rotors de sustentation, voire de propulsion.

Les régimes d'urgence *OEI30", OEI2'* et *OEIcontinu* sont contrôlés par un boîtier électronique de contrôle du turbomoteur. Chaque turbomoteur est relié à un tel boîtier de contrôle, qui est couramment désigné par les initiales de sa dénomination anglaise *EECU* pour « Electronic Engine Control Unit ». Les boîtiers *EECU* possèdent également une liaison entre eux permettant d'échanger des informations sur le fonctionnement des turbomoteurs.

Les puissances associées à chaque régime d'urgence sont déterminées en fonction des conditions de vol, c'est-à-dire la pression et la température extérieures à l'aéronef, correspondant à la pression et la température de l'air alimentant les turbomoteurs, ainsi que la vitesse de l'aéronef et son altitude.

Afin d'entraîner les pilotes des aéronefs à ce type de panne et au fonctionnement dégradé associé, les aéronefs à voilure tournante disposent en général d'un mode dit « école ». Ce mode école permet de simuler la panne totale d'un turbomoteur.

Lors de l'activation du mode école, traditionnellement par un interrupteur au tableau de bord de l'aéronef, le boîtier de contrôle de chaque turbomoteur réduit la puissance des deux turbomoteurs afin que la puissance globale des deux turbomoteurs corresponde à la puissance de super urgence *OEI30"* du premier régime d'urgence. On utilisera dans la suite de la description l'expression « puissance globale réduite » pour désigner cette puissance combinée des deux turbomoteurs en mode école.

Deux configurations sont alors possibles dans le mode école afin d'obtenir cette puissance globale réduite. Tout d'abord, cette puissance peut être répartie de façon uniforme entre les deux turbomoteurs.

Le mode école peut également simuler plus précisément la panne totale d'un turbomoteur en particulier en plaçant ce premier turbomoteur à un régime de ralenti, dans lequel il fournit tout de même une puissance minimum. Dans ce cas, l'interrupteur au tableau de bord dispose de deux positions correspondant à chaque turbomoteur sur lequel peut être simulée la panne. La puissance du second turbomoteur est alors amenée à une valeur proche de la puissance intermédiaire d'urgence *OEIcontinu* du troisième régime d'urgence, en général 5% en dessous de cette puissance. Cette marge de 5% permet d'éviter de dégrader le turbomoteur et les moyens de transmission associés. Les 5% de puissance nécessaires pour obtenir la puissance globale réduite pour l'aéronef sont fournis par le premier turbomoteur au régime de ralenti.

Une fois le mode école activé, la puissance de l'aéronef est limitée à cette puissance globale réduite afin que le pilote s'entraîne dans ce mode de fonctionnement dégradé. Les régimes d'urgence *OEI30", OEI2'* et *OEIcontinu* sont alors simulés dans ce mode de fonctionnement dégradé.

Cependant, le mode école comporte plusieurs inconvénients.

Tout d'abord, la masse de l'aéronef est figée, des abaques définissant, en fonction de cette masse, les domaines de vol autorisés pendant cet entrainement. De fait, cette masse de l'aéronef est prise en compte par les boîtiers de contrôle afin de déterminer la puissance globale réduite.

Ensuite, uniquement la panne totale d'un turbomoteur est simulée dans le mode école. On ne peut pas simuler par exemple une perte partielle de puissance d'un turbomoteur ou l'extinction accidentelle d'un turbomoteur.

De plus, le mode école simulant uniquement et exactement la panne totale d'un turbomoteur, l'entraînement ne peut pas être progressif pour s'adapter par exemple au niveau et à la progression des aptitudes d'un élève.

Enfin, la puissance développée par un turbomoteur tend à décroître dans le temps. De fait, la puissance développée par un turbomoteur neuf est supérieure à la puissance développée par un turbomoteur plus ancien. De fait, les puissances d'urgence disponibles dans un mode de fonctionnement dégradé sont différentes entre un turbomoteur neuf et un turbomoteur ancien.

De fait, une seule configuration est utilisable dans le mode école d'un aéronef, correspondant à une masse de l'aéronef et des puissances des régimes d'urgence imposées par les conditions de vol et l'état de vieillissement des turbomoteurs.

On connait également le document US2009/0186320 qui décrit un système permettant de simuler une panne totale d'un moteur pour différentes configurations. Ces configurations sont prédéfinies et fonction des conditions de vol, telles que la température et la pression extérieures ou l'altitude de l'aéronef. Ce système permet également d'adapter la puissance disponible pour l'entrainement en fonction de la masse totale de l'aéronef, mais uniquement selon deux types de chargement. Ce système permet donc de simuler plusieurs types d'entrainement, mais la puissance disponible est calculée à partir de critères prédéterminés et ne peut donc pas être adaptée notamment au niveau de l'élève.

De plus, le document US2002/133322 décrit un procédé de simulation de la panne d'un moteur, dans lequel la puissance disponible pour la simulation est obtenue en réduisant la puissance d'un premier moteur dont on simule la panne. La puissance du second moteur est alors augmentée afin d'atteindre le niveau de puissance requis. La répartition n'est donc pas uniforme entre les deux moteurs. De fait, en cas de panne réelle du second moteur, le temps de réaction du premier moteur, qui est au ralenti, peut amener l'aéronef dans une situation dangereuse.

On connait le document US2005/234689 qui décrit un procédé de simulation de la panne d'un moteur utilisant des lois d'accélération différentes entre les deux moteurs de l'aéronef. La combinaison de ces accélérations correspond à l'accélération fournie par un seul moteur lors de la panne de l'autre moteur. De plus, la puissance de chaque moteur est diminuée permettant de disposer d'une marge de puissance en cas de panne réelle d'un moteur.

Le document US5873546 décrit un procédé et un système de simulation d'une panne d'un moteur pour différentes configurations. Un switch permet notamment de choisir le mode de panne qui est simulé, parmi les trois modes d'urgence *OEI30', OEI2'* et *OEIcontinu.* Ce procédé permet de plus de sélectionner la masse totale en charge de l'aéronef que l'on souhaite simuler.

Enfin, on connait le document US4831567 qui décrit un procédé de simulation de la panne d'un moteur, dans lequel la puissance totale disponible pour la simulation peut être obtenue en réduisant soit la puissance d'un seul moteur dont on simule la panne, soit la puissance des deux moteurs de façon équivalente. La répartition de puissance n'est donc pas forcément uniforme entre ces deux moteurs, notamment la puissance d'un premier moteur dont on simule la panne pouvant être réduite alors que la puissance du second moteur étant augmentée afin d'atteindre le niveau de puissance totale requis pour la simulation.

La présente invention a alors pour objet de proposer un procédé de simulation de panne permettant de s'affranchir des limitations mentionnées ci-dessus. L'invention concerne un procédé de simulation de panne pour un aéronef muni d'une installation motrice. Cette installation motrice comprend au moins deux turbomoteurs développant conjointement une puissance globale. Chaque turbomoteur est capable de délivrer au moins une puissance d'urgence afin de compenser une panne totale d'au moins un autre turbomoteur.

Ce procédé est remarquable en ce que l'on règle manuellement une valeur réduite de la puissance globale à l'aide d'un premier moyen de réglage, puis on baisse la puissance globale de l'installation motrice jusqu'à cette valeur réduite, pour simuler la panne d'au moins un autre turbomoteur. Cette valeur réduite de la puissance globale est comprise entre une valeur minimum et une valeur maximum.

Chaque turbomoteur possède un boîtier de contrôle *EECU,* qui contrôle notamment les puissances d'urgence de chaque turbomoteur en cas de panne d'un des turbomoteurs. Dans un mode école, ces boîtiers de contrôle permettent de contrôler la puissance de chaque turbomoteur afin de simuler une panne totale d'un des turbomoteurs.

Une première valeur de la puissance globale est alors déterminée par les boîtiers de contrôle, cette première valeur correspondant à la puissance disponible au niveau de l'installation motrice lors de la panne totale d'un des turbomoteurs. La première valeur de la puissance globale est fonction des conditions de vol de l'aéronef, c'est-à-dire la pression et la température extérieures à l'aéronef, ainsi que la vitesse et l'altitude de l'aéronef. Elle prend également en compte la masse de l'aéronef.

Le procédé selon l'invention permet d'augmenter ou de diminuer manuellement cette première valeur, à l'aide d'un premier moyen de réglage, jusqu'à une valeur réduite de la puissance globale.

Ensuite, au démarrage de la simulation, par exemple par l'action sur un bouton dédié, la puissance globale de l'installation motrice est diminuée jusqu'à cette valeur réduite de la puissance globale. Pour cela, le premier moyen de réglage envoie un premier signal, correspondant à sa position, au boîtier de contrôle de chaque turbomoteur. La puissance d'au moins un turbomoteur est alors modifiée en conséquence afin que la puissance globale réduite de l'installation motrice soit égale à cette valeur réduite. Les régimes d'urgence *OEI30", OEI2'* et *OEIcontinu* correspondant à la panne simulée sont modifiés également par le boîtier de contrôle en cohérence avec cette valeur réduite de la puissance globale.

Dans le cadre d'une simulation de panne, ce premier moyen de réglage est utilisé par un instructeur. Ce premier moyen de réglage, en permettant de régler la puissance globale réduite, permet avantageusement de simuler différentes configurations de panne. Par exemple, en augmentant cette puissance globale réduite, il permet à un élève peu expérimenté de démarrer progressivement sa formation. L'instructeur pourra diminuer par la suite, par l'intermédiaire de ce premier moyen de réglage, cette puissance globale réduite au cours des différents entrainements.

De plus, en réglant cette puissance globale réduite, l'instructeur peut simuler des pannes avec différentes masses d'aéronef. Par exemple, en diminuant la puissance globale réduite, un aéronef avec une masse embarquée plus importante est simulé.

En diminuant la puissance globale réduite, il est également possible de simuler un aéronef avec des turbomoteurs anciens, dont la puissance est inférieure à celle de turbomoteurs neufs.

En conséquence, le procédé selon l'invention permet de simuler de nombreuses configurations pour la panne totale d'un turbomoteur, telles que différentes masses totales de l'aéronef, un vieillissement plus ou moins important des turbomoteurs de l'aéronef ou bien une diminution plus ou moins importante de la puissance de l'installation motrice.

Le premier moyen de réglage permet de régler la valeur réduite de la puissance globale avant le démarrage de la simulation. Cependant, il est possible de modifier la puissance globale réduite après le démarrage de la simulation. Pour cela, un changement de la position du premier moyen de réglage, réalisé après l'arrêt momentané de la simulation, entraîne une modification de la puissance globale réduite dès le redémarrage de la simulation. Ce fonctionnement est intéressant notamment dans le cas où la valeur réduite de la puissance globale est inadaptée au niveau de l'élève et que la puissance globale réduite doit être augmentée.

Le procédé selon l'invention peut de plus comporter une ou plusieurs caractéristiques supplémentaires.

La puissance globale réduite fournie par l'installation motrice peut être obtenue de différentes manières. La répartition de la puissance des turbomoteurs peut permettre de simuler précisément la panne d'un turbomoteur en particulier. Dans ce cas, ce turbomoteur est placé à un régime de ralenti, dans lequel il fournit une puissance minimum. La puissance d'au moins un autre turbomoteur est alors amenée à une puissance nécessaire pour obtenir la puissance globale réduite de l'installation motrice.

De préférence, la puissance globale réduite est répartie uniformément sur chaque turbomoteur de l'installation motrice par le procédé selon l'invention. De cette façon, la puissance fournie par chaque turbomoteur est éloignée de sa puissance limite de fonctionnement. De fait, le risque de dégradation de l'installation motrice est réduit et sa durée de vie améliorée. De plus, en cas d'une panne réelle d'un des turbomoteurs de l'installation motrice, une marge de puissance est disponible sur le ou les turbomoteurs fonctionnels.

Le procédé selon l'invention permet également de régler, lors de la simulation de la panne, au moins une caractéristique du passage de la puissance globale à la puissance globale réduite à l'aide d'un second moyen de réglage.

Dans ces conditions, il se fait que lors de la panne totale d'un turbomoteur, la puissance globale de l'installation motrice chute jusqu'à une puissance minimale avant d'augmenter et de se stabiliser à la puissance globale réduite. Cette chute de puissance est définie notamment par deux caractéristiques, un écart A entre cette puissance minimale et la puissance globale réduite ainsi qu'un temps T entre l'instant de la panne simulée, où la puissance globale chute, et l'instant où la puissance globale réduite est atteinte et stabilisée.

Le procédé selon l'invention permet, à l'aide d'un second moyen de réglage, de régler ces deux caractéristiques, l'écart A et le temps T. Pour cela, le second moyen de réglage envoie un second signal au boîtier de contrôle de chaque turbomoteur. Au démarrage de la simulation, les boîtiers de contrôle adaptent alors en conséquence la variation de puissance d'au moins un turbomoteur. Par suite, la puissance globale de l'installation motrice chute et atteint la puissance globale réduite en respectant les deux caractéristiques d'écart A et de temps T définies.

En modifiant ces valeurs d'écart A et de temps T lors de la simulation de la panne totale d'un turbomoteur, on peut alors régler les caractéristiques de la chute de la puissance globale. Cette chute peut ainsi être adaptée au niveau de l'élève et à la progression de ses aptitudes, par exemple en diminuant le temps T, réduisant ainsi le temps de stabilisation de la puissance globale.

Avantageusement, en combinant le premier moyen de réglage et le second moyen de réglage, on peut simuler différents types de pannes au niveau de l'installation motrice de l'aéronef. En effet, contrairement au mode école traditionnellement présent sur les aéronefs qui ne peut simuler que la panne totale d'un turbomoteur, le procédé selon l'invention permet de régler simultanément la puissance globale réduite ainsi que l'écart A et le temps T. Il permet ainsi de simuler d'autres pannes que la perte totale d'un turbomoteur. Ce procédé permet de simuler, par exemple, l'extinction soudaine d'un turbomoteur, la perte d'alimentation en carburant de ce turbomoteur ou bien la rupture d'un élément interne de ce turbomoteur ainsi que la rupture brutale d'un arbre de transmission de puissance.

Le procédé selon l'invention vérifie également la valeur réduite de la puissance globale afin de garantir la sécurité du vol de l'aéronef ainsi que la non dégradation de l'installation motrice.

En effet, le procédé selon l'invention permet, à l'aide d'un moyen de contrôle, de vérifier que la valeur réduite de la puissance globale n'est pas inférieure à une première puissance limite en-dessous de laquelle la sécurité du vol de l'aéronef n'est pas assurée. Cette première puissance limite correspond à une puissance permettant d'assurer à la fois la sustentation de l'aéronef ainsi que sa manoeuvrabilité. Elle est fonction des conditions de vol et de la masse de l'aéronef, et peut être déterminée par le boîtier de contrôle de chaque turbomoteur. Le moyen de contrôle compare alors la valeur réduite de la puissance globale et cette première puissance limite. Si la valeur réduite de la puissance globale devient inférieure à cette première puissance limite, le moyen de contrôle fournit une information au boîtier de contrôle de chaque turbomoteur afin de limiter la puissance globale réduite à cette première puissance limite garantissant ainsi la sûreté du vol.

De plus, le procédé selon l'invention permet, à l'aide de ce moyen de contrôle, de vérifier également que la puissance de chaque turbomoteur permettant d'atteindre la valeur réduite de la puissance globale n'est pas supérieure à une seconde puissance limite au-dessus de laquelle des dégradations sont susceptibles d'être générées au niveau de l'installation motrice. En effet, suivant la répartition de puissance entre chaque turbomoteur, il est possible, la puissance d'un premier turbomoteur étant minimum pour simuler précisément la panne de ce turbomoteur, que la puissance d'un second turbomoteur soit augmentée. Cette seconde puissance limite, fonction des conditions de vol et des caractéristiques de chaque turbomoteur, est déterminée par le boîtier de contrôle de chaque turbomoteur. Le moyen de contrôle compare alors la puissance de chaque turbomoteur et la seconde puissance limite correspondante. Si la puissance d'un turbomoteur devient supérieure à la seconde puissance limite correspondante, le moyen de contrôle peut fournir une information au boîtier de contrôle de ce turbomoteur afin de répartir la puissance globale réduite différemment entre chaque turbomoteur.

Le procédé selon l'invention permet également d'afficher les régimes d'urgence *OEI* correspondant à la valeur réduite de la puissance globale à l'aide d'un moyen d'affichage. En effet, l'élève et l'instructeur doivent connaître les valeurs des régimes d'urgence correspondant à la panne simulée, afin de ne pas dépasser les temps limites autorisés pour les régimes d'urgence *OEI30"* et *OEI2'.* Ces valeurs sont indiquées sur un moyen d'affichage, de préférence identique au moyen d'affichage utilisé lors d'une panne réelle, afin de placer l'élève dans un environnement conforme à l'environnement réel d'une panne.

La présente invention a aussi pour objet un dispositif de simulation de panne d'un aéronef muni d'une installation motrice. Cette installation motrice comprend au moins deux turbomoteurs développant conjointement une puissance globale. Chaque turbomoteur est capable de délivrer au moins une puissance d'urgence afin de compenser une panne totale d'au moins un autre turbomoteur. Chaque turbomoteur est relié à un boîtier de contrôle contrôlant, entre autres, la puissance du turbomoteur. Les boîtiers de contrôle permettent notamment à l'installation motrice de développer une puissance globale réduite correspondant à la puissance d'urgence de ce type de panne ou bien pour simuler cette panne.

Le dispositif selon l'invention comprend un premier moyen de réglage apte à piloter chaque boîtier de contrôle et à régler une valeur réduite de la puissance globale de l'installation motrice lors de la simulation d'une panne.

En effet, chaque boîtier de contrôle permet de contrôler la puissance de chaque turbomoteur aussi bien en cas de panne d'un des turbomoteurs que dans un mode école de simulation d'une telle panne. Ils permettent aussi d'abaisser la puissance globale de l'installation motrice à une première valeur de la puissance globale équivalente à la puissance disponible pour simuler la panne totale d'un turbomoteur.

Le premier moyen de réglage du dispositif permet, avant de démarrer la simulation, d'augmenter ou de diminuer manuellement cette première valeur jusqu'à une valeur réduite de la puissance globale. La puissance globale réduite peut ainsi être diminuée afin par exemple de simuler une masse embarquée plus importante ou augmentée pour s'adapter au niveau de l'élève.

Selon un mode de réalisation le premier moyen de réglage comprend une position médiane dans laquelle la valeur réduite de la puissance globale est égale à cette première valeur de la puissance globale. Le premier moyen de réglage comprend également des positions intermédiaires entre d'une part cette position médiane et d'autre part des positions minimum et maximum. Ces positions intermédiaires correspondent à des premières valeurs de la puissance globale respectivement diminuée ou augmentée entre des valeurs réduites minimum et maximum.

Par exemple, la valeur réduite maximum correspond à une augmentation de 10% de la puissance globale réduite ou bien à une simulation de la masse de l'aéronef diminuée de 10%. Inversement, la valeur réduite minimum correspond à une diminution de 10% de la puissance globale réduite ou bien à une simulation de la masse de l'aéronef augmentée de 10%.

Le dispositif selon l'invention comprend également un second moyen de réglage qui permet de régler, lors de la simulation de la panne, au moins une caractéristique du passage de la puissance globale à la puissance globale réduite.

Le second moyen de réglage permet notamment d'augmenter ou de diminuer deux caractéristiques particulières, l'écart A entre une puissance minimale obtenue lors de la chute de la puissance globale, et la puissance globale réduite ainsi que le temps T entre l'instant de la panne simulée où la puissance globale chute et l'instant où la puissance globale réduite est atteinte et stabilisée.

Pour cela, au démarrage de la simulation de la panne, le boîtier de contrôle de chaque turbomoteur adapte en conséquence la variation de puissance d'au moins un turbomoteur. Par suite, la puissance globale de l'installation motrice chute et atteint la puissance globale réduite en respectant les deux caractéristiques d'écart A et de temps T définies. La variation de la puissance de chaque turbomoteur peut être obtenue, par exemple, en modifiant l'alimentation en carburant de chaque turbomoteur ainsi qu'en faisant varier la décélération ou l'accélération des régimes de rotation de ces turbomoteurs.

Plusieurs variantes sont possibles au niveau de ce second moyen de réglage. Selon une première variante, le second moyen de réglage comprend une position médiane dans laquelle ces deux caractéristiques, l'écart A et le temps T, correspondent à la panne totale d'un turbomoteur. Le second moyen de réglage comprend, de plus, des positions intermédiaires entre d'une part cette position médiane et d'autre part des positions minimum et maximum, dans lesquelles ces deux caractéristiques sont respectivement diminuées ou augmentées entre des valeurs minimum et maximum.

Selon une seconde variante, le second moyen de réglage comprend une position maximum dans laquelle ces deux caractéristiques, l'écart A et le temps T, correspondent à la panne totale d'un turbomoteur. Le second moyen de réglage comprend également des positions intermédiaires entre cette position maximum et une position minimum dans lesquelles ces deux caractéristiques sont diminuées jusqu'à une valeur minimum.

Dans un mode de réalisation préféré de l'invention, la puissance globale réduite est répartie uniformément entre chaque turbomoteur de l'installation motrice. Les turbomoteurs ont alors une puissance diminuée limitant les risques de dégradations. De plus, ils peuvent réagir rapidement en cas de panne réelle sur un des turbomoteurs, disposant d'une marge de puissance utilisable.

Selon un mode de réalisation de l'invention, le dispositif comprend un moyen de contrôle, afin de garantir la sécurité du vol de l'aéronef ainsi que la non dégradation de l'installation motrice.

Le moyen de contrôle permet tout d'abord de vérifier que la puissance globale réduite n'est pas inférieure à une première puissance limite en-dessous de laquelle la sécurité du vol de l'aéronef n'est pas assurée. Cette première puissance limite correspond à une puissance permettant d'assurer à la fois la sustentation de l'aéronef ainsi que sa manoeuvrabihté.

Le moyen de contrôle permet de vérifier également que la puissance de chaque turbomoteur permettant d'atteindre la valeur réduite de la puissance globale n'est pas supérieure à une seconde puissance limite. En effet, au-dessus de cette seconde puissance limite, des dégradations sont susceptibles d'être générées au niveau de l'installation motrice.

Dans un mode de réalisation de l'invention, le dispositif comprend un moyen d'affichage, permettant d'afficher les régimes d'urgence *OEI* correspondant à la puissance globale réduite, en particulier les deux régimes d'urgence *OEI30"* et *OEI2'.* L'élève et l'instructeur doivent, en effet, être informés de ces régimes dont les durées d'utilisation sont limitées. Les valeurs de ces régimes d'urgence *OEI30"* et *OEI2*' ainsi que la valeur du régime d'urgence *OEIcontinu* correspondant à la panne simulée sont alors indiquées sur un moyen d'affichage de l'aéronef.

L'invention et ses avantages apparaîtront avec plus de détails dans le cadre de la description qui suit avec des exemples de réalisation donnés à titre illustratif en référence aux figures annexées qui représentent :
- la figure 1, un aéronef équipé d'un dispositif de simulation de panne,
- la figure 2, un synoptique du procédé selon l'invention,
- la figure 3, un mode de réalisation du premier moyen de réglage de ce dispositif,
- la figure 4, un mode de réalisation du second moyen de réglage de ce dispositif,
- la figure 5, une courbe représentant la puissance globale fournie par l'installation motrice, et
- la figure 6, un mode de réalisation du moyen d'affichage de ce dispositif.

Les éléments présents dans plusieurs figures distinctes sont affectés d'une seule et même référence.

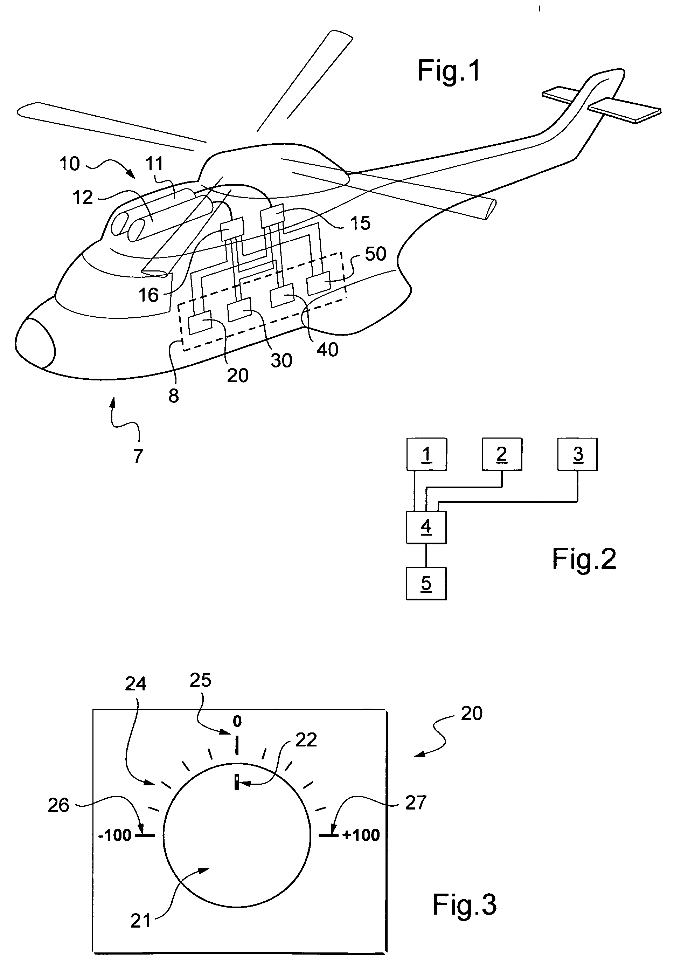

La figure 1 représente un aéronef 7 équipé d'une installation motrice 10. Cette installation motrice 10 comprend deux turbomoteurs 11 et 12 ainsi que deux boîtiers de contrôle 15 et 16, chaque turbomoteur 11 et 12 étant relié à un boîtier de contrôle 15 et 16. Les deux turbomoteurs 11 et 12 développent conjointement une puissance globale. Les boîtiers de contrôle 15 et 16 permettent notamment de contrôler les puissances d'urgence de chaque turbomoteur 11 et 12, en cas de panne totale d'un des turbomoteurs 11 et 12.

La figure 2 représente un synoptique du procédé de simulation de panne. L'étape 1 consiste à régler une valeur réduite de la puissance globale de l'installation motrice 10. L'étape 4 consiste ensuite à baisser la puissance globale de l'installation motrice 10 jusqu'à cette valeur réduite. Cette étape 4 correspond au démarrage de la simulation de la panne.

L'étape 2 consiste à régler des caractéristiques du passage de la puissance globale à la valeur réduite, réglée à l'étape 1. Cette étape 2 est simultanée à l'étape 1.

L'étape 3 consiste à vérifier que la valeur réduite de la puissance globale, réglée à l'étape 1, garantit la sécurité du vol de l'aéronef 7 ainsi que la non dégradation de l'installation motrice. Cette étape 3 est simultanée à l'étape 1.

L'étape 5 consiste à afficher les valeurs des régimes d'urgence *OEI30", OEI2'* et *OEIcontinu* correspondant à la puissance globale réduite de l'installation motrice. Cette étape 5 se déroule après l'étape 4.

L'aéronef 7 peut également inclure un dispositif 8 de simulation de panne. Ce dispositif 8 est muni d'un premier moyen de réglage 20, d'un second moyen de réglage 30, d'un moyen d'affichage 40 et d'un moyen de contrôle 50.

Le premier moyen de réglage 20 permet de régler la valeur réduite de la puissance globale de l'installation motrice 10. Le second moyen de réglage 30 permet de régler des caractéristiques du passage de la puissance globale à la valeur réduite, réglée par le premier moyen de réglage 20.

Le moyen de contrôle 50 permet de vérifier que la valeur réduite de la puissance globale, réglée à l'étape 1, garantit la sécurité du vol de l'aéronef 7 ainsi que la non dégradation de l'installation motrice.

Le moyen d'affichage 40 permet d'afficher les valeurs des régimes d'urgence *OEI30", OEI2'* et *OEIcontinu* correspondant à la puissance globale réduite de l'installation motrice 10.

La valeur réduite de la puissance globale est réglée, au cours de l'étape 1, par l'intermédiaire du premier moyen de réglage 20 qui permet d'augmenter ou de diminuer une première valeur de la puissance globale de l'installation motrice 10 jusqu'à la valeur réduite. Cette première valeur de la puissance globale est équivalente à la puissance globale disponible lors de la panne totale d'un turbomoteur 11 et 12.

Ensuite, ce premier moyen de réglage 20 fournit un premier signal, correspondant à la valeur réduite, aux boîtiers de contrôle 15 et 16. Lors de l'étape 4, les boîtiers de contrôle 15 et 16 contrôlent la puissance des turbomoteurs 11 et 12, afin que la puissance globale de l'installation motrice 10 soit égale à la valeur réduite réglée à l'étape 1.

Cette puissance globale réduite fournie par l'installation motrice 10 est obtenue par une répartition uniforme de la puissance entre les deux turbomoteurs 11 et 12.

Le premier moyen de réglage 20, représenté sur la figure 3, comprend une molette 21 rotative, disposant d'un repère 22, et des graduations 24. Lorsque la molette 21 est tournée, le repère 22 se déplace entre une graduation minimum 26 et une graduation maximum 27, une graduation médiane 25 étant présente entre la graduation minimum 26 et la graduation maximum 27.

Lorsque le repère 22 est aligné avec la graduation médiane 25, notée par exemple « 0 », la valeur réduite est égale à la première valeur de la puissance globale de l'installation motrice 10. Lorsque le repère 22 est aligné avec une graduation comprise entre la graduation médiane 25 et la graduation maximum 27, notée par exemple « +100 » ou bien est aligné avec cette graduation maximum 27, la valeur réduite est augmentée. Inversement, lorsque le repère 22 est aligné avec une graduation comprise entre la graduation médiane 25 et la graduation minimum 26, notée par exemple « -100 » ou bien est aligné avec cette graduation minimum 26, la valeur réduite est diminuée.

Le second moyen de réglage 30 permet, au cours de l'étape 3, d'augmenter ou de diminuer deux caractéristiques particulières du passage de la puissance globale à la puissance globale réduite. Il s'agit de l'écart A entre une puissance minimale, qui apparaît lors de la simulation de la panne, et la puissance globale réduite ainsi que le temps T entre l'instant de la panne simulée, où la puissance globale chute, et l'instant où la puissance globale réduite est atteinte et stabilisée.

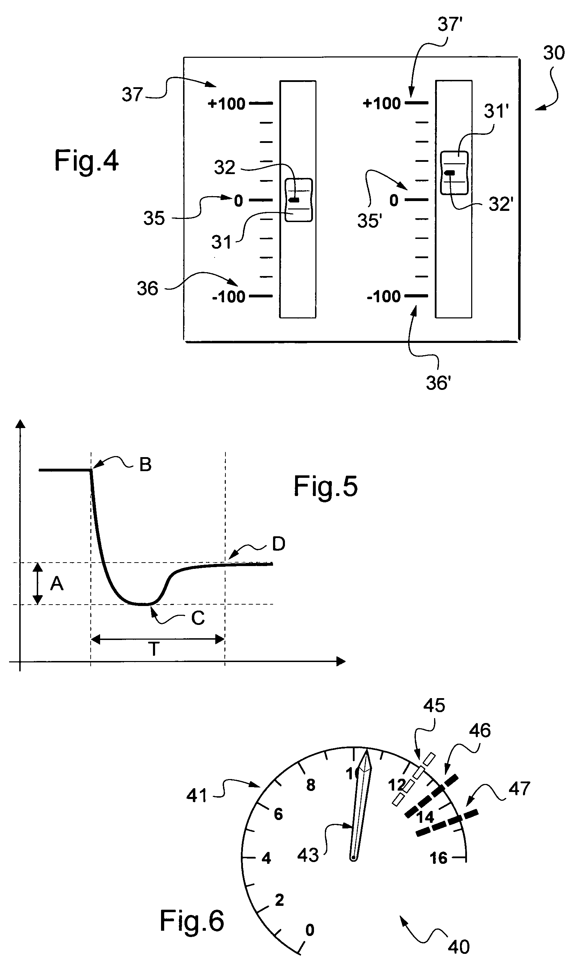

La figure 5 représente une courbe de variation de la puissance globale de l'installation motrice 10 en ordonnée, en fonction du temps en abscisse, sur laquelle sont identifiées ces caractéristiques A et T. Lors de la panne totale d'un turbomoteur au point B, la puissance globale chute rapidement jusqu'à la puissance minimale au point C. Ensuite, la puissance globale augmente jusqu'à se stabiliser au point D à la puissance globale réduite. L'écart A est la différence de puissance entre la puissance minimale et la puissance globale réduite stabilisée, c'est-à-dire entre les points C et D. Le temps T est la différence de temps entre l'instant où la puissance globale chute et l'instant où la puissance globale réduite est stabilisée, c'est-à-dire entre les points B et D.

Le second moyen de réglage 30 transmet alors un second signal, correspondant à ces caractéristiques, aux boîtiers de contrôle 15 et 16. Ensuite, lors de l'étape 4, la variation de la puissance d'au moins un turbomoteur est alors adaptée afin que la puissance globale de l'installation motrice chute et atteigne la puissance globale réduite en respectant les deux caractéristiques d'écart A et de temps T définies.

La variation de la puissance de chaque turbomoteur 11 et 12, contrôlée par les boîtiers de contrôle 15 et 16, peut être obtenue, par exemple, en modifiant l'alimentation en carburant de chaque turbomoteur 11 et 12 ainsi qu'en faisant varier la décélération ou l'accélération des régimes de rotation d'au moins un des deux turbomoteurs 11 et 12.

Le second moyen de réglage 30, représenté sur la figure 4, comprend deux boutons 31 et 31', chaque bouton 31 et 31' se déplaçant de façon linéaire entre une graduation minimum 36 et 36' et une dégradation maximum 37 et 37'. Une graduation médiane 35 et 35' est présente entre la graduation minimum 36 et 36' et la graduation maximum 37 et 37'. Les boutons 31 et 31', disposant d'un repère 32 et 32', permettent de modifier respectivement l'écart A et le temps T.

Lorsque les repère 32 et 32' sont alignés simultanément avec les graduations médianes 35 et 35', notées par exemple « 0 » et présentes respectivement entre les graduations minimum 36 et 36' et les dégradations maximum 37 et 37', le dispositif de simulation n'applique aucune modification à la variation de la puissance globale de l'installation motrice 10 lors de l'étape 4. Cette variation de la puissance globale correspond alors à la panne complète d'un des deux turbomoteurs 11 et 12.

Lorsque le repère 32 du bouton 31 est aligné avec une graduation comprise entre la graduation médiane 35 et la graduation maximum 37, notée par exemple « +100 » ou bien est aligné avec cette graduation maximum 37, l'écart A de la variation de la puissance globale de l'installation motrice 10 est augmenté. Inversement, lorsque le repère 32 est aligné avec une graduation comprise entre la graduation médiane 35 et la une graduation minimum 36, notée par exemple « -100 » ou bien est aligné avec cette une graduation minimum 36, cet écart A est diminué.

De la même manière, le déplacement du bouton 31', entre les graduations minimum 36' et maximum 37' provoque l'augmentation ou la diminution du temps T de la variation de la puissance globale de l'installation motrice 10.

En combinant le premier moyen de réglage 20 et le second moyen de réglage 30, différents types de pannes peuvent être simulés au niveau de l'installation motrice 10, tels que la panne totale d'un turbomoteur 11 et 12, l'extinction soudaine d'un turbomoteur 11 et 12 ou bien la rupture d'un élément interne de ce turbomoteur 11 et 12 ainsi que la rupture brutale d'un arbre de transmission de puissance.

Par ailleurs, le moyen de contrôle 50 vérifie, lors de l'étape 3, que la valeur réduite de la puissance globale, réglée à l'étape 1, n'est pas inférieure à une première puissance limite en-dessous de laquelle la sécurité du vol de l'aéronef 7 n'est pas assurée. Le moyen de contrôle 50 vérifie également que la puissance de chaque turbomoteur permettant d'atteindre la valeur réduite de la puissance globale n'est pas supérieure à une seconde puissance limite, au-dessus de laquelle des dégradations sont susceptibles d'être générées au niveau de l'installation motrice.

Le moyen d'affichage 40 permet, au cours de l'étape 5, d'afficher les régimes d'urgence *OEI30", OEI2'* et *OEIcontinu*

Le moyen d'affichage 40, représenté sur la figure 6, comporte un cadran 41 muni de graduations et une aiguille 43 mobile. Ces graduations représentent les niveaux de puissance de l'installation motrice 10 de l'aéronef 7 et l'aiguille 43 indique la puissance instantanée de l'installation motrice 10. Le pilote peut ainsi visualiser la marge de puissance disponible. Notamment, lors d'une simulation de panne, les puissances correspondant aux différents régimes d'urgence OEI sont affichées. En effet, l'élève doit connaître les valeurs de ces régimes d'urgence correspondant à la puissance globale réduite de la panne simulée afin notamment de ne pas dépasser les temps limites autorisés. Le moyen d'affichage 40 indique ainsi les régimes d'urgence *OEI30", OEI2'* et *OEicontinu* respectivement avec les repères 47, 46 et 45.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Procédé de simulation de panne pour un aéronef (7) muni d'une installation motrice (10), ladite installation motrice (10) comprenant au moins deux turbomoteurs (11,12) développant conjointement une puissance globale, chaque turbomoteur (11,12) pouvant délivrer au moins une puissance d'urgence afin de compenser une panne d'au moins un autre turbomoteur (11,12),
**caractérisé en ce que** l'on règle manuellement une valeur réduite de ladite puissance globale à l'aide d'un premier moyen de réglage (20) et au moins deux caractéristiques du passage de ladite puissance globale à ladite valeur réduite à l'aide d'un second moyen de réglage (30), puis on baisse ladite puissance globale jusqu'à ladite valeur réduite pour simuler ladite panne, ladite valeur réduite étant comprise entre une valeur minimum et une valeur maximum, ladite valeur réduite de ladite puissance globale étant atteinte en passant par une puissance minimale, lesdites caractéristiques comprenant un écart A entre ladite puissance minimale et ladite valeur réduite de la puissance globale ainsi qu'un temps T entre l'instant de ladite panne simulée et l'instant où ladite puissance globale se stabilise à ladite valeur réduite.

2. Procédé selon la revendication 1,
**caractérisé en ce que** l'on vérifie à l'aide d'un moyen de contrôle (50) que ladite valeur réduite de ladite puissance globale n'est pas inférieure à une première puissance limite en-dessous de laquelle la sécurité du vol dudit aéronef (7) n'est pas assurée.

3. Procédé selon la revendication 2,
**caractérisé en ce que** l'on vérifie à l'aide dudit moyen de contrôle (50) que chaque puissance desdits turbomoteurs (11,12) constituant ladite valeur réduite de ladite puissance globale n'est pas supérieure à une seconde puissance limite au-dessus de laquelle des dégradations sont susceptibles d'être générées au niveau de ladite installation motrice (10).

4. Procédé selon l'une quelconque des revendications 1 à 3,
**caractérisé en ce que** l'on répartit ladite valeur réduite de ladite puissance globale uniformément sur chaque turbomoteur (11,12).

5. Procédé selon l'une quelconque des revendications 1 à 4,
**caractérisé en ce que** l'on affiche, à l'aide d'un moyen d'affichage (40), des régimes d'urgence *OEI* correspondant à ladite valeur réduite de ladite puissance globale.

6. Dispositif de simulation de panne (8) pour un aéronef (7) comportant :
- une installation motrice (10) comprenant au moins deux turbomoteurs (11,12) développant conjointement une puissance globale, chaque turbomoteur (11,12) pouvant délivrer au moins une puissance d'urgence afin de compenser une panne d'au moins un autre turbomoteur (11,12),
- un boîtier de contrôle (15,16) pour chaque turbomoteur (11,12), chaque boîtier de contrôle (15,16) étant relié à un turbomoteur (11,12) et contrôlant sa puissance,
**caractérisé en ce que** ledit dispositif comprend un premier moyen de réglage (20) et un second moyen de réglage (30) aptes à piloter lesdits boîtiers de contrôle (15,16) et ledit premier moyen de réglage (20) réglant une valeur réduite de ladite puissance globale lors d'une simulation de ladite panne et ledit second moyen de réglage (30) réglant au moins deux caractéristiques du passage de ladite puissance globale à ladite valeur réduite de ladite puissance globale, ladite valeur réduite de ladite puissance globale étant atteinte en passant par une puissance minimale, lesdites caractéristiques comprenant un écart A entre ladite puissance minimale et ladite valeur réduite de ladite puissance globale ainsi qu'un temps T entre l'instant de ladite panne simulée et l'instant où ladite puissance globale se stabilise à ladite valeur réduite.

7. Dispositif (8) selon la revendication 6,
**caractérisé en ce que** ledit boîtier de contrôle (15,16) peut modifier l'alimentation en carburant dudit turbomoteur (11,12) auquel il est relié afin de modifier au moins une desdites caractéristiques.

8. Dispositif (8) selon l'une quelconque des revendications 6 à 7,
**caractérisé en ce que** ledit dispositif (8) comprend un moyen de contrôle (50) permettant de vérifier que ladite valeur réduite de ladite puissance globale n'est pas inférieure à une première puissance limite en-dessous de laquelle la sécurité du vol dudit aéronef (7) n'est pas assurée.

9. Dispositif (8) selon la revendication 8,
**caractérisé en ce que** ledit moyen de contrôle (50) permet de vérifier que chaque puissance desdits turbomoteurs (11,12) constituant ladite valeur réduite de ladite puissance globale n'est pas supérieure à une seconde puissance limite au-dessus de laquelle des dégradations sont susceptibles d'être générées au niveau de ladite installation motrice (10).

10. Dispositif (8) selon l'une quelconque des revendications 6 à 9,
**caractérisé en ce que** ladite valeur réduite de ladite puissance globale est répartie uniformément sur chaque turbomoteur (11,12).

11. Dispositif (8) selon l'une quelconque des revendications 6 à 10,
**caractérisé en ce que** ledit dispositif (8) comprend un système d'affichage (40) permettant d'afficher des régimes d'urgence *OEI* correspondant à ladite valeur réduite de ladite puissance globale.

## Patentansprüche

1. Verfahren zur Simulation einer Störung in einem Luftfahrzeug (7) mit einer Antriebsanlage (10), wobei die Antriebsanlage (10) mindestens zwei Turbomotoren (11, 12) aufweist, die zusammen eine Gesamtleistung abgeben, wobei jeder Turbomotor (11, 12) mindestens eine Notleistung abgeben kann, um eine Störung des mindestens einen anderen Turbomotors (11, 12) zu kompensieren,
**dadurch gekennzeichnet, dass** man manuell cinen reduzierten Wert der Gesamtleistung mit Hilfe eines ersten Reglers (20) regelt und mindestens zwei Eigenschaften des Übergangs von der Gesamtleistung auf den reduzierten Wert mit Hilfe eines zweiten Reglers (30) regelt, und man dann die Gesamtleistung bis auf den reduzierten Wert absenkt, um die Störung zu simulieren, wobei der reduzierte Wert zwischen einem minimalen Wert und einem maximalen Wert liegt, wobei der reduzierte Wert der Gesamtleistung erreicht wird über eine minimale Leistung, wobei die Eigenschaften einen Unterschied A zwischen der minimalen Leistung und dem reduzierten Wert der Gesamtleistung sowie eine Zeit T zwischen dem Zeitpunkt des Auftretens der simulierten Störung und dem Zeitpunkt, an dem sich die Gesamtleistung auf den reduzierten Wert stabilisiert, aufweisen.

2. Verfahren nach Anspruch 1,
**dadurch gekennzeichnet, dass** man mit Hilfe eines Steuermittels (50) überprüft, ob der reduzierte Wert der Gesamtleistung nicht kleiner ist als eine erste Grenzleistung, unterhalb der die Sicherheit des Fluges des Luftfahrzeugs (7) nicht sichergestellt ist.

3. Verfahren nach Anspruch 2,
**dadurch gekennzeichnet, dass** man mit Hilfe des Steuermittels (50) überprüft, ob jede Leistung der Turbomotoren (11, 12), die den reduzierten Wert der Gesamtleistung bildet, nicht größer als eine zweite Grenzleistung ist, oberhalb der Funktionsminderungen der Antriebsanlage (10) auftreten können.

4. Verfahren nach einem der Ansprüche 1 bis 3,
**dadurch gekennzeichnet, dass** der reduzierte Wert der Gesamtleistung gleichmäßig auf jeden Turbomotor (11, 12) verteilt wird.

5. Verfahren nach einem der Ansprüche 1 bis 4,
**dadurch gekennzeichnet, dass** mit Hilfe eines Anzeigemittels (40) Notregelungen OEI angezeigt werden, die dem reduzierten Wert der Gesamtleistung entsprechen.

6. Vorrichtung zur Simulation einer Störung (8) in einem Luftfahrzeug (7) mit:
- einer Antriebsanlage (10) mit mindestens zwei Turbomotoren (11, 12), die zusammen eine Gesamtleistung enturickeln, wobei jeder Turbomotor (11, 12) mindestens eine Notleistung abgeben kann, um eine Störung des mindestens einen anderen Turbomotors (11, 12) zu kompensieren,
- einen Steuerungskasten (15, 16) für jeden Turbomotor (11, 12), wobei jeder Steuerungskasten (15, 16) mit einem Turbomotor (11, 12) verbunden ist, und dessen Leistung steuert,
**dadurch gekennzeichnet, dass** die Vorrichtung aufweist: einen ersten Regler (20) und einen zweiten Regler (30), die geeignet sind, die Steuerungskästen (15, 16) zu steuern, und wobei der erste Regler (20) einen reduzierten Wert der Gesamtleistung während einer Simulation der Störung regelt, und der zweite Regler (30) mindestens zwei Eigenschaften des Übergangs von der Gesamtleistung zu dem reduzierten Wert der Gesamtleistung regelt, wobei der reduzierte Wert der Gesamtleistung über eine minimale Leistung erreicht wird, wobei die Eigenschaften einen Unterschied A zwischen der minimalen Leistung und dem reduzierten Wert der Gesamtleistung sowie ein Zeitintervall T zwischen dem Zeitpunkt des Auftretens der simulierten Störung und dem Zeitpunkt, an dem sich die Gesamtleistung auf den reduzierten Wert stabilisiert, aufweisen.

7. Vorrichtung (8) nach Anspruch 6,
**dadurch gekennzeichnet, dass** der Steuerkasten (15, 16) die Treibstoffzufuhr des Turbomotors (11, 12), mit dem er verbunden ist, verändern kann, um mindestens eine der Eigenschaften zu verändern.

8. Vorrichtung (8) nach einem der Ansprüche 6 bis 7,
**dadurch gekennzeichnet, dass** die Vorrichtung (8) ein Steuermittel (50) aufweist, das es erlaubt zu überprüfen, ob der reduzierte Wert der Gesamtleistung nicht kleiner ist als eine erste Grenzleistung, unterhalb der die Sicherheit des Flugs des Luftfahrzeugs (7) nicht gewährleistet ist.

9. Vorrichtung (8) nach Anspruch 8,
**dadurch gekennzeichnet, dass** das Steuermittel (50) es erlaubt zu überprüfen, ob jede Leistung der Turbomotoren (11, 12), die den reduzierten Wert der Gesamtleistung darstellt, nicht größer ist als eine zweite Grenzleistung, oberhalb der Funktionsminderungen der Antriebsanlage (10) auftreten können.

10. Vorrichtung (8) nach einem der Ansprüche 6 bis 9,
**dadurch gekennzeichnet, dass** der reduzierte Wert der Gesamtleistung gleichmäßig auf jeden Turbomotor (11, 12) verteilt wird.

11. Vorrichtung (8) nach einem der Ansprüche 6 bis 10,
**dadurch gekennzeichnet, dass** die Vorrichtung (8) ein Anzeigesystem (40) aufweist, das es erlaubt, Notregelungen OEI anzuzeigen, die dem reduzierten Wert der Gesamtleistung entsprechen.

## Claims

1. A method of simulating a failure for an aircraft (7) provided with a power plant (10), said power plant (10) comprising at least two turboshaft engines (11, 12) jointly developing an overall power, each turboshaft engine (11, 12) being capable of delivering at least one contingency power in order to compensate for a failure of at least one other turboshaft engine (11, 12),
**characterised in that** a reduced value of said overall power is set manually with the aid of a first setting means (20) and at least two characteristics of the passage of said overall power to said reduced value with the aid of a second setting means (30), then said overall power is lowered to said reduced value in order to simulate said failure, said reduced value being between a minimum value and a maximum value, said reduced value of said overall power being achieved by passing through a minimum power, said characteristics comprising a difference A between said minimum power and said reduced value of the overall power and also a time T between the instant of said simulated failure and the instant at which said overall power stabilises at said reduced value.

2. A method according to Claim 1,
**characterised in that** it is verified with the aid of a monitoring means (50) that said reduced value of said overall power is not less than a first limit power below which safe flight of said aircraft (7) is not guaranteed.

3. A method according to Claim 2,
**characterised in that** it is verified with the aid of said monitoring means (50) that each power of said turboshaft engines (11, 12) constituting said reduced value of said overall power is not greater than a second limit power above which degradation is liable to be generated at said power plant (10).

4. A method according to any one of Claims 1 to 3,
**characterised in that** said reduced value of said overall power is distributed uniformly to each turboshaft engine (11, 12).

5. A method according to any one of Claims 1 to 4,
**characterised in that** *OEI* contingency ratings corresponding to said reduced value of said overall power are displayed with the aid of display means (40).

6. A device for simulating a failure (8) for an aircraft (7), comprising:
- a power plant (10) comprising at least two turboshaft engines (11, 12) jointly developing an overall power, each turboshaft engine (11, 12) being capable of delivering at least one contingency power in order to compensate for a failure of at least one other turboshaft engine (11, 12),
- a control unit (15, 16) for each turboshaft engine (11, 12), each control unit (15, 16) being connected to a turboshaft engine (11, 12) and controlling its power,
**characterised in that** said device comprises a first setting means (20) and a second setting means (30) suitable for driving said control units (15,16) and said first setting means (20) regulating a reduced value of said overall power during a simulation of said failure and said second setting means (30) setting at least two characteristics of the passage of said overall power to said reduced value of said overall power, said reduced value of said overall power being reached by passing through a minimum power, said characteristics comprising a difference A between said minimum power and said reduced value of said overall power and also a time T between the instant of said simulated failure and the instant at which said overall power stabilises at said reduced value.

7. A device (8) according to Claim 6,
**characterised in that** said control unit (15, 16) is capable of modifying the fuel supply to said turboshaft engine (11, 12) to which it is connected in order to modify at least one of said characteristics.

8. A device (8) according to any one of Claims 6 to 7,
**characterised in that** said device (8) comprises a monitoring means (50) which makes it possible to verify that said reduced value of said overall power is not less than a first limit power below which safe flight of said aircraft (7) is not guaranteed.

9. A device (8) according to Claim 8,
**characterised in that** said monitoring means (50) makes it possible to verify that each power of said turboshaft engines (11, 12) constituting said reduced value of said overall power is not greater than a second limit power above which degradation is liable to be generated at said power plant (10).

10. A device (8) according to any one of Claims 6 to 9,
**characterised in that** said reduced value of said overall power is distributed uniformly to each turboshaft engine (11, 12).

11. A device (8) according to any one of Claims 6 to 10,
**characterised in that** said device (8) comprises a display system (40) which makes it possible to display *OEI* contingency ratings corresponding to said reduced value of said overall power.
